# FASCICULE DE BREVET EUROPEEN

(11) **EP 1 928 763 B1**
(45) Date de publication et mention de la délivrance du brevet: **11.05.2016**
(21) Numéro de dépôt: 06820141.7
(22) Date de dépôt: 27.09.2006
(51) Int. Cl.: A23L 7/161

(54) **ENSEMBLE DE PRESENTATION ET DE PREPARATION DE COMPOSITION SOUFFLEE**
ANORDNUNG ZUR BEREITSTELLUNG UND ZUBEREITUNG EINER AUFGEBLÄHTEN ZUSAMMENSETZUNG
ASSEMBLY FOR PRESENTING AND PREPARING A PUFFED COMPOSITION

(30) Priorité: 29.09.2005 FR 0509941
(43) Date de publication de la demande: 11.06.2008
(73) Titulaire: NATAÏS, 32130 Bézéril (FR)
(72) Inventeur: EHMANN, Michael, F-32130 Bézéril (FR)
(74) Mandataire: Ipside
(86) Numéro de dépôt international: PCT/FR2006/002192
(87) Numéro de publication internationale: WO 2007/036635

(56) Documents cités:
- EP-A- 0 545 611
- WO-A-00/61456
- WO-A-2004/032633
- WO-A-2004/087530
- US-A- 5 214 257

## Description

La présente invention concerne un ensemble de présentation et de préparation de composition soufflée et un procédé de préparation et de présentation de composition soufflée.

La présente invention concerne de nombreux types de compositions soufflées, en particulier du popcorn.

Par "composition soufflée", on entend au sens de la présente invention une composition dont au moins certains composants sont expansibles. Par exemple le volume de ces particules expansibles une fois soufflées est supérieur ou égal à deux fois, notamment à cinq fois, en particulier à dix fois, tout particulièrement à vingt fois, voire à trente fois, ou même à cinquante fois le volume avant soufflage.

Ces particules peuvent être soufflées notamment sous l'effet de la chaleur.

II est connu des ensembles comprenant un emballage et des grains de maïs à éclater, encore appelés non soufflés, destinés à être soufflés, notamment dans un four à microondes, pour obtenir du popcorn.

Les documents WO00/61456, WO2004/087530 et US 5,214,257 décrivent tous trois de tels emballages pour popcorn à préparer au four à micro-ondes, qui comportent un étui externe dépliable à l'intérieur duquel est placée une enveloppe interne contenant des grains de maïs à éclater. En particulier, selon le document WO00/61456, l'enveloppe interne est formée de deux parois liées l'une à l'autre de manière amovible, qui se séparent lors du soufflage. L'une de ces parois est liée à une partie amovible de l'ensemble.

Ces compositions comprennent généralement de la matière grasse comestible, notamment du type huile ou graisse, en quantité assez importante. Ceci a souvent pour conséquence d'une part de développer une odeur de friture peu agréable. D'autre part, l'emballage est fréquemment souillé par la matière grasse de la composition, ce qui peut provoquer un contact désagréable avec les doigts du consommateur.

Il subsiste ainsi un besoin pour un ensemble de préparation, notamment par micro ondes, et de présentation d'une composition soufflée qui ne présente pas les inconvénients évoqués ci-dessus.

Les inventeurs ont ainsi découvert qu'un ensemble spécifique permettait de résoudre au moins en partie les inconvénients précités

Selon un premier aspect, l'invention a pour objet un ensemble de préparation et de présentation de composition comestible destinée à être soufflée comprenant :
- une partie (A) définissant une chambre destinée à permettre la présentation de la composition soufflée,
- une partie (B) définissant une chambre de stockage destinée à comprendre au moins une composition non soufflée, ladite partie (B) étant disposé dans la partie (A),
ledit ensemble étant tel que défini dans la revendication 1, et/ou l'une quelconque des revendications 2 à 10.

L'ensemble selon l'invention permet notamment de limiter la quantité de matière grasse présente dans et/ou en contact avec la partie (A) de présentation. En effet, la partie (B), éventuellement en association avec une autre partie, peut également permettre de collecter au moins une partie de la matière grasse.

L'invention concerne également un procédé de préparation et de présentation de composition comestible soufflée tel que défini dans la revendication 11 et/ou l'une quelconque des revendications 12 à 15.

### Brève description des figures

- Figure 1A: Vue en coupe d'ensemble de préparation et de présentation en mode plié,
- Figures 2A et 2C : Vues en coupe d'ensembles de préparation et de présentation avant préparation.
- Figures 3A et 3C : Vues en coupe d'ensembles de préparation et de présentation pendant le soufflage de la composition.

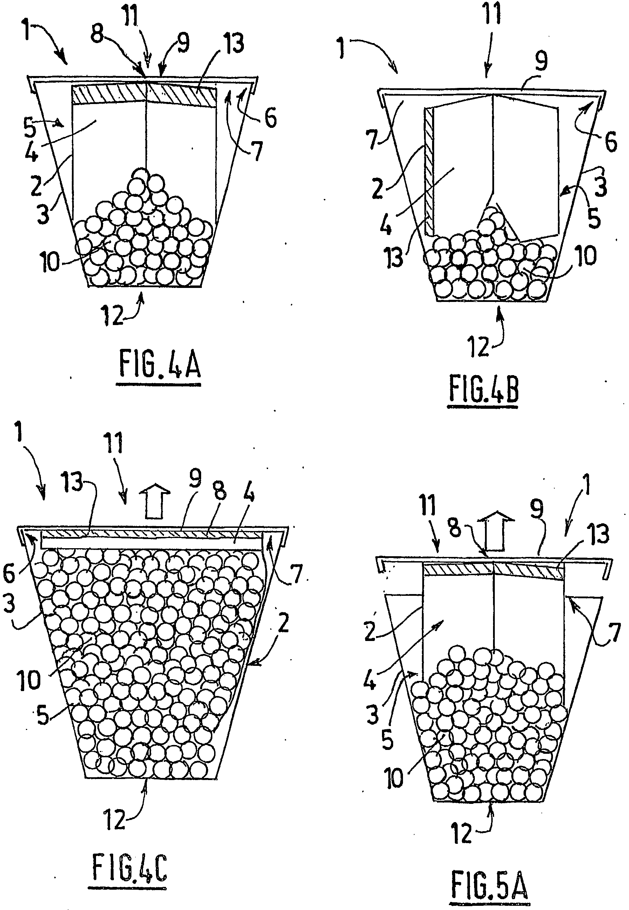

- Figures 4A, 4B et 4C : Vues en coupe d'ensembles avant ouverture.

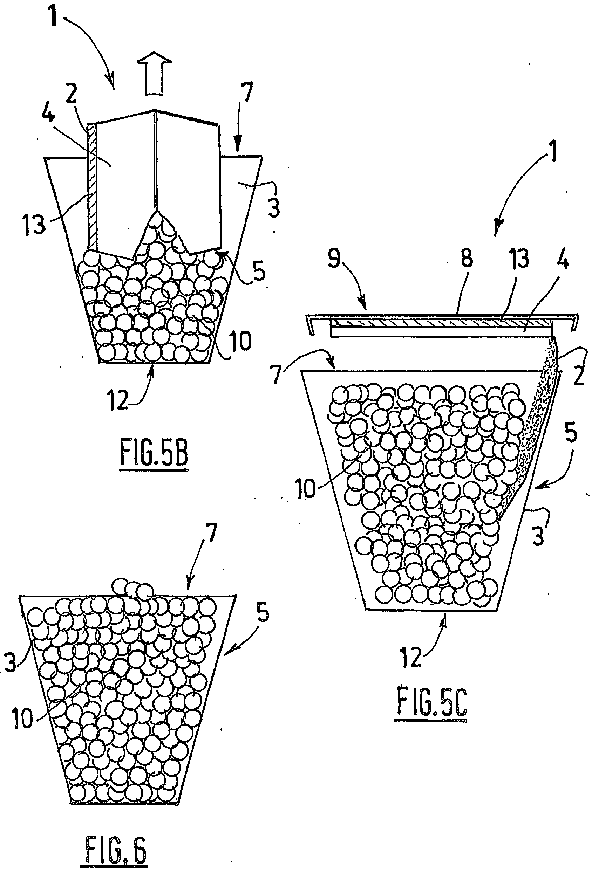

- Figures 5A, 5B et 5C : Vues en coupe d'ensembles lors de la séparation ou de l'extraction de la chambre de stockage.
- Figure 6 : Vue en coupe d'une partie présentation de composition soufflée d'un ensemble.

Les figures sont présentées à titre illustratif et nullement limitatif de l'invention.

L'ensemble selon l'invention comprend au moins une composition non soufflée, notamment dans la partie (B), et en particulier uniquement dans la partie (B).

L'ensemble (1) comprend une paroi (2) définissant une partie (B) destinée à former une chambre de stockage (4) pour la composition destinée à être soufflée. Ce dispositif (1) comprend également une paroi (3) définissant au moins une partie (A) destinée à former une chambre de présentation (5) de la composition soufflée.

Les parties (A) et (B) sont généralement bien distinctes. En particulier elles sont indépendantes, c'est-à-dire ne partagent qu'au plus un moyen de fixation.

En particulier, la partie (B) est agencée pour être disposée dans la partie (A) de manière à confiner la composition soufflée lors du soufflage.

Par "confiner", on entend au sens de la présente invention que la partie (B) isole au moins une partie de l'intérieur de l'ensemble de la composition soufflée. En particulier la partie (B) permet que la composition, soufflée et/ou non soufflée, ne rentre pas en contact avec au moins une partie de l'intérieur de l'ensemble, notamment de sa face supérieure ou d'une paroi.

L'ensemble (1) selon l'invention peut comprendre un suscepteur (13) agencé de telle manière que lorsque l'ensemble (1) est soumis à un chauffage par micro-ondes, il permet à la composition destinée à être soufflée d'atteindre la température permettant le soufflage de cette composition, en particulier lorsque :
- l'axe de l'ensemble présente un angle supérieur ou égal à 10°, notamment supérieur ou égal à 15° et en particulier supérieur ou égal à 20°, par rapport à un axe vertical, ou
- l'axe de l'ensemble présente un angle inférieur ou égal à 20°, notamment inférieur ou égal à 15°, et en particulier inférieur ou égal à 10° par rapport à un axe vertical et la face supérieure est située en dessous de la face inférieure.

En particulier, l'ensemble est placé sur le plateau du four via sa face supérieure.

Selon un mode de réalisation particulier, l'axe de l'ensemble selon l'invention peut présenter un angle inférieur ou égal à 45°, notamment inférieur ou égal à 30°, et en particulier un angle inférieur ou égal à 15° avec un axe horizontal, voire être horizontal.

Selon un autre mode de réalisation particulier, l'axe de l'ensemble selon l'invention peut présenter un angle inférieur ou égal à 5° par rapport à la verticale, voire être vertical et permettre, lorsque l'ensemble (1) est soumis à un chauffage par micro-onde avec la face supérieure placée en dessous de la face inférieure, à la composition d'être soufflée. Autrement dit, le dispositif peut être agencé de telle manière que lorsque l'axe de l'ensemble est sensiblement vertical et que ledit dispositif repose sur sa face supérieur dans un four, notamment à micro-ondes, le chauffage permet à la composition d'être soufflée, tout en souillant peu ou pas la partie de présentation (5).

En particulier, dans le cas d'un chauffage par microonde, l'agencement spécifique du suscepteur au voisinage de la face supérieure, voire uniquement sur la face supérieure ou sur la partie amovible, et plus particulièrement sur le couvercle peut permettre à la composition d'être soufflée.

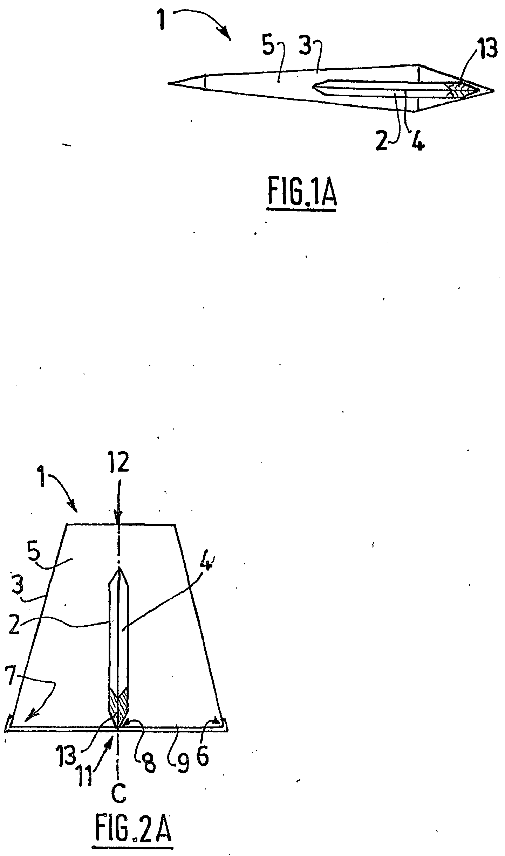

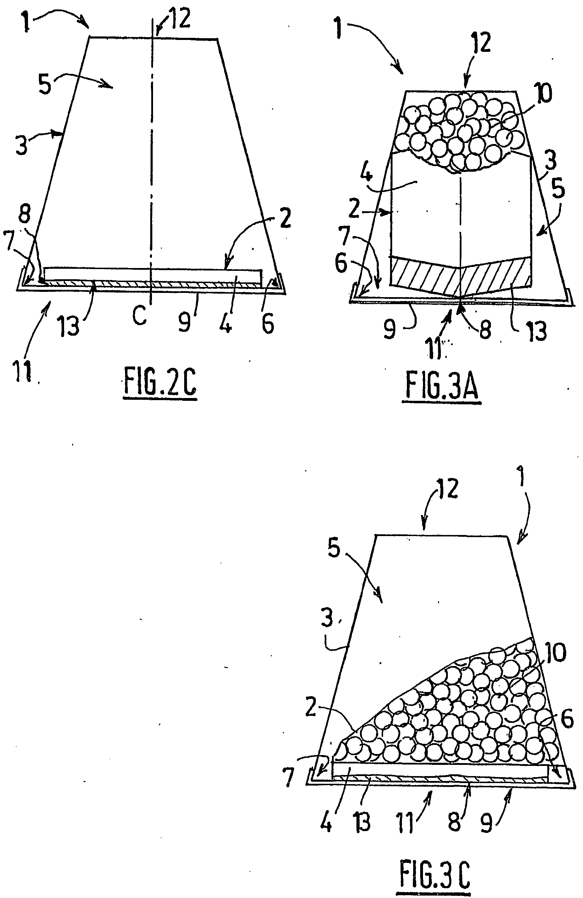

Par "axe de l'ensemble", on entend au sens de la présente invention un axe de symétrie de la partie (A) de présentation, en particulier l'axe (C) tel que représenté en figures 2A et 2C.

En particulier, l'ensemble comprend au moins une position dans laquelle un ou le plan défini par le suscepteur (13) présente un angle inférieur à 10° par rapport à l'horizontale, voire est horizontal, lorsque l'ensemble ne repose pas sur sa face inférieure.

La partie (B) de stockage peut être recouverte au moins partiellement par un suscepteur et/ou comprendre un suscepteur. Tout particulièrement le suscepteur présent dans l'ensemble (1) est uniquement présent sur cette partie (B).

En particulier, l'ensemble comprend un suscepteur qui est situé plus près de la partie supérieure (11) que de la partie inférieure (12), et notamment une partie du suscepteur est en contact avec la partie supérieure (11).

Tout particulièrement, le suscepteur est présent au moins en partie, voire uniquement, sur la chambre de stockage (4).

On entend par "suscepteur", au sens de la présente invention un élément, notamment métallisé, absorbant un rayonnement électromagnétique et le convertissant en chaleur.

Le suscepteur, en particulier dans le cadre d'une application micro-ondes, peut être composé d'au moins 2 couches de polymères, en particulier de PET, entre lesquelles à été déposé une couche métallique très mince, notamment à base d'aluminium. La déposition de la couche métallisée se fait généralement sous-vide, ce qui entraîne une vaporisation du métal et permet de créer des suscepteurs extrêmement fins. Les PET utilisés peuvent en général résister à une montée brutale de la température, et à un maintien de celle-ci. Le suscepteur peut notamment avoir pour rôle d'absorber le rayonnement micro-onde et de le convertir en chaleur. Le suscepteur peut monter très rapidement en température et diffuser l'énergie thermique à certains ou tous les éléments qui se situent à son voisinage immédiat.

L'ensemble (1) comprend une partie (9) destinée à former une ouverture (7) permettant de prélever la composition soufflée. Cette partie (9) peut notamment être appelée partie amovible.

L'ensemble selon l'invention comprend une partie mobile ou amovible, destinée à être séparée de la partie chambre de présentation (5), de manière à ouvrir l'ensemble (1), notamment pour permettre l'accès à la composition soufflée au consommateur.

Cette partie amovible peut notamment comprendre le couvercle de l'ensemble (1).

Cette partie amovible est liée à la chambre de stockage (4). Ceci permet notamment lors de l'ouverture de l'ensemble (1) de retirer la chambre de stockage (4) souillée par exemple par les matières grasses. Ainsi, le dispositif (1) permet que la chambre de présentation (5) ne soit pas souillée par toutes les matières grasses de la composition, et soit donc propre ou relativement propre, notamment en terme de matières grasse.

Cette partie amovible peut également comprendre au moins un suscepteur. En particulier le(s) suscepteur(s) présent dans l'ensemble (1) est(sont) présent(s) uniquement sur cette partie amovible.

L'ensemble (1) selon l'invention comprend une face supérieure (11) et une face inférieure (12). Celles-ci peuvent être de forme rectangulaire ou circulaire. En particulier, la face supérieure (11) présente une surface égale ou plus grande que la face inférieure (12).

La face inférieure (12) peut être définie comme la face sur laquelle repose la chambre de présentation (5) lorsque celle-ci est séparée de la chambre de stockage (4). En général, la face supérieure (11) est la plus proche de l'ouverture (7), en particulier comprend l'ouverture, voire se confond avec elle. En particulier la face supérieure fait partie de la partie amovible.

Autrement exprimé, la face supérieure peut être la face sur laquelle se situe l'ouverture destinée à permettre d'accéder à la composition soufflée.

L'ensemble (1) peut comprendre des moyens de séparations (6) destinés à séparer la chambre de présentation (5) d'une partie (9) destinée à former une ouverture (7). Cette partie (9) peut être par exemple un couvercle, dans ce cas, les moyens de séparation peuvent notamment être un clippage du couvercle sur la paroi (3).

Les moyens de séparations (6) peuvent par exemple être un pré-découpage de la paroi (3), une matérialisation de la partie à découper sur la partie externe de la paroi (3) ou des moyens d'accrochage d'un couvercle à la paroi (3).

La paroi (2) est liée par des moyens de fixation (8) à la partie (9), notamment de manière à ce que lorsque la chambre de présentation et la partie (9) sont séparées, la chambre de stockage (4) puisse être retirée en même temps.

Parmi les moyens de fixations (8) on peut citer la colle.

L'ensemble (1) peut comprendre des moyens d'ouverture (9). Ces moyens d'ouverture (9) peuvent consister en des volets accrochés l'un à l'autre ou en un couvercle.

Lorsque l'ensemble (1) est ouvert, au moins une partie de la paroi (2) peut se situer au-dessus de la composition soufflée (10), notamment de manière à ce qu'il soit aisé de retirer la chambre de stockage (4).

La paroi (2) peut notamment être réalisée avec des matériaux imperméables à la lumière, à l'air, à l'humidité et/ou aux matières grasses. Ceci pouvant notamment permettre une meilleure conservation de la composition alimentaire.

La paroi (3) peut notamment être rigide, et en particulier elle peut être réalisée en plastique ou à partir de matière cartonnée, notamment en carton en fibre de bois vierge pour respecter le contact alimentaire.

Tout particulièrement, la paroi (2) permet l'utilisation d'huile(s) liquide présentant de bonnes qualités nutritionnelles et de santé, en particulier en terme de faible teneur en matières grasses partiellement hydrogénées et/ou en acides gras saturés.

La paroi (3) peut comprendre des fentes ou des ouvertures permettant notamment une évacuation de la vapeur d'eau et de la chaleur.

Les dimensions de la chambre de stockage (4) sont ajustées de manière à permettre que la composition soit correctement soufflée. Par " correctement soufflé ", on entend au sens de la présente invention qu'au moins 70 %, notamment au moins 80 %, en particulier au moins 90 %, tout particulièrement au moins 95 %, et encore plus particulièrement 99 % des grains composant la composition alimentaire ont été soufflés.

En particulier, l'épaisseur de la chambre de stockage (4) peut être inférieure ou égale à 4 cm, notamment inférieure ou égale à 3 cm, en particulier inférieure ou égale à 2,5 cm, par exemple inférieure ou égale à 2 cm, tout particulièrement inférieure ou égale à 1,5 cm.
En général, la chambre de stockage (4) comprend de 5 à 300 g, notamment de 10 à 250 g, en particulier de 20 à 200g de composition destinée à être soufflée.

La chambre de stockage (4) peut s'ouvrir sous l'effet de l'expansion de la composition soufflée. Dans ce cas, l'ouverture peut plus particulièrement se faire vers la face inférieure (12).

La chambre de stockage (4) peut être réalisée, en tout ou partie, en polyéthylène, polypropylène, polyéthylène, téréphtalate (PET), cellophane, mylar, films laminés à base d'oxydes d'aluminium ou de silicium, nylon, feuilles métalliques, film polymère métallisé, papiers traités, produits laminés, ou un mélange de ceux-ci.

La chambre de stockage peut tout particulièrement être réalisée en PET, et notamment comprendre uniquement 2 couches de PET au maximum, et notamment, les scellages peuvent faire intervenir deux couches de PET au maximum. Ceci peut notamment permettre l'ouverture de la chambre de stockage sans avoir recours à un chauffage excessif. En effet, lorsque 4 couches de PET sont scellées, le chauffage nécessaire à l'ouverture de la chambre de stockage peut être excessif et/ou engendrer des dégradations.

En particulier, la chambre de stockage peut être réalisée sur une ensacheuse verticale.

Tout particulièrement, la chambre de stockage peut être métallisée ou partiellement démétallisée pour définir un suscepteur.

La chambre de stockage (4) peut présenter, après soufflage, une partie intacte du côté de la face supérieure (H). En particulier, la chambre de stockage (4) s'ouvre du côté opposé à la face supérieure.

La chambre de stockage (4) peut comprendre plusieurs compartiments, comprenant chacun diverses parties ou ingrédients de la composition à souffler. En particulier elle comprend trois compartiments. Un compartiment peut comprendre des grains à éclater, un autre au moins une matière grasse, et encore un autre au moins un colorant et/ou un arôme.

Les compartiments peuvent être séparés les uns des autres, notamment par un scellage fin. En particulier, le scellage peut être effectué par ultrason ou être un scellage thermique.

Lors du chauffage, les grains à éclater libèrent de la vapeur et conduisent à la libération progressive des ingrédients sur les grains. Ceci peut permettre ensuite, après l'ouverture des différents scellages fins délimitant les compartiments, l'ouverture de la chambre de stockage (4), notamment dans la direction opposée au suscepteur et/ou à l'ouverture du dispositif.

Les compartiments peuvent s'ouvrir selon un certain schéma temporel. Notamment selon la force nécessaire à l'ouverture des différents scellages et selon la quantité de vapeur libérée dans les compartiments, il est possible de faire en sorte que les compartiments s'ouvrent selon un schéma temporel assez précis. Par exemple, le scellage entre le premier compartiment et le deuxième peut s'ouvrir après 1 minute de chauffage par micro-onde à une certaine puissance, puis le scellage entre le deuxième compartiment et le troisième peut s'ouvrir après 2 minutes de chauffage, etc. Ceci peut notamment permettre de contrôler et/ou de limiter, au moins partiellement, le chauffage de certains ingrédients et ainsi, par exemple, de limiter la dégradation de certains ingrédients qui peuvent être sensibles à la chaleur ou de contrôler le degré de caramélisation de la composition soufflée, etc.

La chambre de présentation (5) présente en général un volume allant de 150 à 9000 cm3, notamment de 300 à 7500 cm3, et en particulier de 600 à 6000 cm3.

Ainsi que le montre la figure 1A l'ensemble (1) peut se présenter sous forme pliée, ce qui peut notamment permettre de réduire l'espace nécessaire pour son stockage.

L'ensemble (1) peut être placé dans un emballage, notamment imperméable a la lumière, à l'air et/ou à l'eau. Cet emballage peut permettre une meilleure conservation de la composition alimentaire.

En général, il est nécessaire de retirer cet emballage avant chauffage.

L'ensemble selon l'invention est particulièrement destiné à être utilisé dans un four à micro-ondes. Dans ce cas, les matériaux utilisés sont, bien entendu, compatibles avec ces conditions.

L'ensemble selon l'invention peut également comprendre des matériaux destinés à améliorer le chauffage par microondes.

L'ensemble selon l'invention comprend une composition comestible destinée à être soufflée.

Cette composition peut notamment comprendre des grains de maïs à éclater.

Cette composition comprend également au moins une matière grasse, notamment une graisse ou une huile, notamment de l'huile de palme, de l'huile de carthame, de l'huile de colza, de l'huile de coton, de l'huile de maïs, de l'huile de lin, de l'huile d'arachide, de l'huile de tournesol et/ou de l'huile de soja.

La composition peut comprendre du sel, du poivre et/ou du paprika.

La composition peut également comprendre un agent sucrant, par exemple choisi dans la liste comprenant du sucralose, de l'isomalt, du sucre, notamment du sucre glace ou cristal,

La composition peut également comprendre au moins un agents de texture et/ou au moins un agent de saveur, par exemple choisi dans la liste comprenant l'arôme beurre, l'arôme caramel, l'arôme cheddar, l'arôme TexMex et l'arôme piment.

La composition peut comprendre au moins un arôme, notamment choisi dans la liste comprenant le doux, l'aigre, le sucré, le savoureux, l'apre, l'épicé et le fruité, le beurre, le fromage, la crème, la ciboulette, l'aneth, les fines herbes, l'oignon, l'ail, le bacon, la pizza, la tomate, le vinaigre, le barbecue, la cannelle, la noix de muscade, le fumé, ou un mélange de ceux-ci.

La composition peut comprendre au moins un exhausteur de goût.

La composition peut en outre comprendre au moins un colorant alimentaire, notamment choisi dans la liste comprenant le colorant naturel El60b orange.

Selon un autre aspect, l'invention a pour objet un procédé de préparation et de présentation de popcorn comprenant au moins les étapes suivantes consistant à :
- placer un ensemble (1) selon l'invention, c'est à dire un ensemble de préparation et de présentation de composition comestible destinée à être soufflée comprenant :
- une partie (A) définissant une chambre destinée à permettre la présentation de la composition soufflée,
- une partie (B) définissant une chambre de stockage destinée à comprendre au moins une composition non soufflée, ladite partie (B) étant disposée dans la partie (A), et conforme à l'une quelconque des revendications 1 à 10, dans un appareil de chauffage, notamment un four, et en particulier un four à micro-ondes, via sa face supérieure, la face inférieure de l'ensemble (1) n'étant pas en contact avec le plan supportant l'ensemble selon l'invention, par exemple la grille du four ou le plateau du four à micro-onde,
- chauffer l'ensemble (1), en particulier jusqu'à ce que la composition soit soufflée,
- ouvrir l'ensemble, et
- retirer la partie de stockage (4) de la composition destinée à être soufflée.

Tout particulièrement dans le cas où l'ensemble (1) comprend une partie amovible comprenant la partie de stockage (4) reliée à un couvercle, les deux dernières étapes peuvent être concomitantes.

En particulier, le procédé comprend une étape supplémentaire consistant à placer la face inférieure (12) de l'ensemble (1) à un angle inférieur ou égal à 30°, notamment inférieur ou égal à 20°, et en particulier inférieur ou égal à 10° par rapport à l'horizontale, voire à l'horizontale, avant l'étape d'ouverture.

## Revendications

1. Ensemble (1) de préparation et de présentation de composition comestible destinée à être soufflée, comprenant :
- une face supérieure (11) et une face inférieure (12),
- au moins une composition non soufflée comprenant au moins une matière grasse,
- une partie (A) définissant une chambre destinée à permettre la présentation de la composition soufflée, dite chambre de présentation (5),
- une partie (B) définissant une chambre de stockage (4) destinée à comprendre au moins ladite composition non soufflée, ladite partie (B) étant disposée dans la partie (A), et
- une partie amovible (9) destinée à être séparée de la chambre de présentation (5) de manière à ouvrir l'ensemble (1) pour permettre l'accès à la composition soufflée, ladite partie amovible étant liée à la chambre de stockage (4),
**caractérisé en ce que** l'ensemble est agencé de telle manière qu'il permet à la composition d'être soufflée tout en souillant peu ou pas la chambre de présentation (5) lorsque l'ensemble repose sur sa face supérieure (11), et **en ce que** ladite partie amovible est liée à la chambre de stockage (4) de sorte à permettre, lors de l'ouverture de l'ensemble, de retirer la chambre de stockage souillée par la matière grasse sans que la chambre de présentation soit souillée par la matière grasse de la composition.

2. Ensemble selon la revendication 1, **caractérisé en ce qu'**il comporte un suscepteur (13) susceptible d'absorber un rayonnement électromagnétique et de le convertir en chaleur, agencé de telle manière que lorsque l'ensemble est soumis à un chauffage par micro-ondes, il permet à la composition destinée à être soufflée d'atteindre la température permettant le soufflage de cette composition.

3. Ensemble selon la revendication 2, **caractérisé en ce que** la chambre de stockage (4) est recouverte au moins partiellement par ledit suscepteur (13) et/ou comprend ledit suscepteur (13).

4. Ensemble selon la revendication 2, **caractérisé en ce que** le suscepteur (13) est présent uniquement sur ladite partie amovible (9).

5. Ensemble selon l'une quelconque des revendications 1 à 4, **caractérisé en ce que** la chambre de stockage (4) comprend plusieurs compartiments.

6. Ensemble selon l'une quelconque des revendications 1 à 5, dans lequel la chambre de stockage (4) est réalisée, en tout ou partie, en polyéthylène, polypropylène, polyéthylène téréphtalate (PET), cellophane, mylar, films laminés à base d'oxydes d'aluminium ou de silicium, nylon, feuilles métalliques, film polymère métallisé, papiers traités, produits laminés, ou un mélange de ceux-ci.

7. Ensemble selon l'une quelconque des revendications 1 à 6, dans lequel :
- la partie amovible (9) est un couvercle destiné à former une ouverture (7) se confondant avec la face supérieure (11) de l'ensemble (1),
- l'ensemble comprend des moyens de séparation (6) destinés à séparer la chambre de présentation (5) de la partie amovible (9),
- la chambre de stockage (4) est liée à la partie amovible (9), par des moyens de fixation (8), de manière à ce que lorsque la chambre de présentation (5) et la partie amovible (9) sont séparées, la chambre de stockage soit retirée en même temps,
- la chambre de stockage s'ouvre vers la face inférieure (12) de l'ensemble sous l'effet de l'expansion de la composition lors de son soufflage,
- et la chambre de stockage présente une section transversale décroissante à une extrémité opposée à la face inférieure (12) de l'ensemble.

8. Ensemble selon l'une quelconque des revendications 1 à 7, **caractérisé en ce que** la composition non soufflée comprend du maïs à éclater.

9. Ensemble selon l'une quelconque des revendications 1 à 8, **caractérisé en ce que** la matière grasse est une huile.

10. Ensemble selon l'une quelconque des revendications 1 à 8, **caractérisé en ce que** la matière grasse est une graisse.

11. Procédé de préparation et de présentation de composition comestible soufflée comprenant au moins les étapes suivantes consistant à :
- placer un ensemble (1) de préparation et de présentation de composition comestible destinée à être soufflée selon l'une quelconque des revendications 1 à 10 dans un appareil de chauffage, via sa face supérieure (12), la face inférieure (12) de l'ensemble n'étant pas en contact avec le plan supportant l'ensemble (1) selon l'invention,
- chauffer l'ensemble (1),
- ouvrir l'ensemble (1), et
- retirer la chambre de stockage (4) de la composition soufflée.

12. Procédé selon la revendication 11, dans lequel l'appareil de chauffage est un four et le plan supportant l'ensemble (1) est la grille dudit four.

13. Procédé selon la revendication 11, dans lequel l'appareil de chauffage est un four à micro-ondes et le plan supportant l'ensemble (1) est le plateau dudit four à microondes.

14. Procédé selon l'une quelconque des revendications 11 à 13, selon lequel l'ensemble (1) est chauffé jusqu'à ce que la composition soit soufflée.

15. Procédé selon l'une quelconque des revendications 11 à 14, comprenant, après l'étape consistant à chauffer l'ensemble (1), une étape consistant à placer l'ensemble (1) de sorte à ce que la chambre de présentation (5) repose sur la face inférieure (12) pour l'étape consistant à retirer la chambre de stockage (4).

## Patentansprüche

1. Anordnung (1) zur Zubereitung und Bereitstellung einer essbaren Zusammensetzung, die dazu bestimmt ist, aufgebläht zu werden, aufweisend:
- eine obere Seite (11) und eine untere Seite (12),
- mindestens eine nicht aufgeblähte Zusammensetzung, die mindestens eine Fettsubstanz aufweist,
- einen Teil (A), der eine Kammer definiert, die dazu bestimmt ist, die Bereitstellung der aufgeblähten Zusammensetzung zu ermöglichen, genannt Bereitstellungskammer (5),
- einen Teil (B), der eine Lagerkammer (4) definiert, die dazu bestimmt ist, mindestens die nicht aufgeblähte Zusammensetzung aufzuweisen, wobei der Teil (B) in dem Teil (A) angeordnet ist, und
- einen abnehmbaren Teil (9), der dazu bestimmt ist, von der Bereitstellungskammer (5) getrennt zu werden, um die Anordnung (1) zu öffnen, um den Zugang zu der aufgeblähten Zusammensetzung zu ermöglichen, wobei der abnehmbare Teil mit der Lagerkammer (4) verbunden ist,
**dadurch gekennzeichnet, dass** die Anordnung derart eingerichtet ist, dass sie es der Zusammensetzung ermöglicht, aufgebläht zu werden und dabei die Bereitstellungskammer (5) wenig oder nicht zu verschmutzen, wenn die Anordnung auf ihrer oberen Seite (11) ruht, und dadurch, dass der abnehmbare Teil mit der Lagerkammer (4) derart verbunden ist, dass er es während der Öffnung der Anordnung ermöglicht, die mit der Fettsubstanz verschmutzte Lagerkammer abzunehmen, ohne dass die Bereitstellungskammer mit der Fettsubstanz der Zusammensetzung verschmutzt wird.

2. Anordnung nach Anspruch 1, **dadurch gekennzeichnet, dass** sie einen Suszeptor (13) aufweist, der geeignet ist, eine elektromagnetische Strahlung zu absorbieren und sie in Wärme umzuwandeln, der derart eingerichtet ist, dass, wenn die Anordnung einer Erwärmung durch Mikrowellen unterzogen wird, er es der Zusammensetzung, die dazu bestimmt ist, aufgebläht zu werden, ermöglicht, die Temperatur zu erreichen, die das Aufblähen dieser Zusammensetzung ermöglicht.

3. Anordnung nach Anspruch 2, **dadurch gekennzeichnet, dass** die Lagerkammer (4) mindestens teilweise von dem Suszeptor (13) bedeckt ist und/oder den Suszeptor (13) aufweist.

4. Anordnung nach Anspruch 2, **dadurch gekennzeichnet, dass** der Suszeptor (13) nur auf dem abnehmbaren Teil (9) vorhanden ist.

5. Anordnung nach einem der Ansprüche 1 bis 4, **dadurch gekennzeichnet, dass** die Lagerkammer (4) mehrere Abteile aufweist.

6. Anordnung nach einem der Ansprüche 1 bis 5, wobei die Lagerkammer (4) ganz oder teilweise aus Polyethylen, Polypropylen, Polyethylenterephthalat (PET), Cellophan, Mylar, Verbundfolien auf der Basis von Aluminium- oder Siliciumoxiden, Nylon, Metallfolien, metallisierten Polymerfolien, behandelten Papieren, Verbundprodukten oder Gemischen davon hergestellt ist.

7. Anordnung nach einem der Ansprüche 1 bis 6, wobei:
- der abnehmbare Teil (9) ein Deckel ist, der dazu bestimmt ist, eine Öffnung (7) zu bilden, die in die obere Seite (11) der Anordnung (1) übergeht,
- die Anordnung Trennmittel (6) aufweist, die dazu bestimmt sind, die Bereitstellungskammer (5) von dem abnehmbaren Teil (9) zu trennen,
- die Lagerkammer (4) mit dem abnehmbaren Teil (9) mit Befestigungsmitteln (8) verbunden ist, damit, wenn die Bereitstellungskammer (5) und der abnehmbare Teil (9) getrennt werden, zugleich die Lagerkammer abgenommen wird,
- sich die Lagerkammer unter Einwirkung der Ausdehnung der Zusammensetzung während deren Aufblähung zur unteren Seite (12) der Anordnung öffnet,
- und die Lagerkammer eine abnehmende Querschnittsfläche an einem Ende gegenüber der unteren Seite (12) der Anordnung aufweist.

8. Anordnung nach einem der Ansprüche 1 bis 7, **dadurch gekennzeichnet, dass** die nicht aufgeblähte Zusammensetzung Popcornmais aufweist.

9. Anordnung nach einem der Ansprüche 1 bis 8, **dadurch gekennzeichnet, dass** die Fettsubstanz ein Öl ist.

10. Anordnung nach einem der Ansprüche 1 bis 8, **dadurch gekennzeichnet, dass** die Fettsubstanz ein Fett ist.

11. Verfahren zur Zubereitung und Bereitstellung einer essbaren, aufgeblähten Zusammensetzung, das mindestens die folgenden Schritte aufweist:
- Anordnen einer Anordnung (1) zur Zubereitung und Bereitstellung der essbaren Zusammensetzung, die dazu bestimmt ist, aufgebläht zu werden, nach einem der Ansprüche 1 bis 10 über ihre obere Seite (12) in einem Erwärmungsgerät, wobei die untere Seite (12) der Anordnung nicht mit der Fläche in Kontakt ist, die die Anordnung (1) gemäß der Erfindung trägt,
- Erwärmen der Anordnung (1),
- Öffnen der Anordnung (1), und
- Abnehmen der Lagerkammer (4) von der aufgeblähten Zusammensetzung.

12. Verfahren nach Anspruch 11, wobei das Erwärmungsgerät ein Ofen ist und die Fläche, die die Anordnung (1) trägt, das Gitter des Ofens ist.

13. Verfahren nach Anspruch 11, wobei das Erwärmungsgerät ein Mikrowellenofen ist und die Fläche, die die Anordnung (1) trägt, der Teller des Mikrowellenofens ist.

14. Verfahren nach einem der Ansprüche 11 bis 13, gemäß dem die Anordnung (1) so lange erwärmt wird, bis die Zusammensetzung aufgebläht ist.

15. Verfahren nach einem der Ansprüche 11 bis 14, das, nach dem Schritt zum Erwärmen der Anordnung (1), einen Schritt zum Anordnen der Anordnung (1) aufweist, so dass die Bereitstellungskammer (5) für den Schritt zum Abnehmen der Lagerkammer (4) auf der unteren Seite (12) ruht.

## Claims

1. Assembly (1) for preparing and presenting an edible composition intended to be puffed, comprising:
- an upper face (11) and a lower face (12),
- at least one non-puffed composition containing at least one fatty substance,
- a portion (A) defining a chamber intended to allow the puffed composition to be presented and referred to as the presentation chamber (5),
- a portion (B) defining a storage chamber (4) intended to contain at least the said non-puffed composition, the said portion (B) being arranged inside the portion (A), and
- a removable portion (9) intended to be detached from the presentation chamber (5) so as to open the assembly (1) and allow access to the puffed composition, the said removable portion being attached to the storage chamber (4),
**characterized in that** the assembly is arranged in such a way that it allows the composition to be puffed with little or no soiling of the presentation chamber (5) when the assembly is resting on its upper face (11) and **in that** the said removable portion is connected to the storage chamber (4) in such a way as to allow the fatty substance-soiled storage chamber to be removed at the time of opening of the assembly without the presentation chamber becoming soiled with the fatty substance of the composition.

2. Assembly according to Claim 1, **characterized in that** it comprises a susceptor (13) capable of absorbing electromagnetic radiation and of converting it into heat, arranged in such a way that when the assembly is subjected to microwave heating it allows the composition intended to be puffed to reach the temperature that will allow this composition to puff.

3. Assembly according to Claim 2, **characterized in that** the storage chamber (4) is at least partially covered with the said susceptor (13) and/or comprises the said susceptor (13).

4. Assembly according to Claim 2, **characterized in that** the susceptor (13) is present only on the said removable portion (9).

5. Assembly according to any one of Claims 1 to 4, **characterized in that** the storage chamber (4) comprises several compartments.

6. Assembly according to any one of Claims 1 to 5, in which the storage chamber (4) is made, entirely or partially, from polyethylene, polypropylene, polyethylene terephthalate (PET), cellophane, mylar, laminated films based on aluminium oxides or on silicon oxides, nylon, metal foils, metallized polymer film, treated paper, laminated products or a mixture thereof.

7. Assembly according to any one of Claims 1 to 6, in which:
- the removable portion (9) is a lid intended to form an opening (7) that coincides with the upper face (11) of the assembly (1),
- the assembly comprises separation means (6) intended to separate the presentation chamber (5) from the removable portion (9),
- the storage chamber (4) is connected to the removable portion (9) by attachment means (8) so that when the presentation chamber (5) and the removable portion (9) are separated, the storage chamber is removed at the same time,
- the storage chamber opens towards the lower face (12) of the assembly under the effect of the expansion of the composition as it puffs,
- and the storage chamber has a cross section that decreases at an end opposite the lower face (12) of the assembly.

8. Assembly according to any one of Claims 1 to 7, **characterized in that** the non-puffed composition comprises corn to be popped.

9. Assembly according to any one of Claims 1 to 8, **characterized in that** the fatty substance is an oil.

10. Assembly according to any one of Claims 1 to 8, **characterized in that** the fatty substance is a fat.

11. Method for preparing and presenting an edible puffed composition, comprising at least the following steps consisting in:
- placing an assembly (1) for preparing and presenting an edible composition intended to be puffed according to any one of Claims 1 to 10 in a heating apparatus, via its upper face (12), the lower face (12) of the assembly not being in contact with the plane supporting the assembly (1) according to the invention,
- heating the assembly (1),
- opening the assembly (1), and
- removing the storage chamber (4) of the puffed composition.

12. Method according to Claim 11, in which the heating apparatus is an oven and the plane supporting the assembly (1) is the rack of the said oven.

13. Method according to Claim 11, in which the heating apparatus is a microwave oven and the plane supporting the assembly (1) is the plate of the said microwave oven.

14. Method according to any one of Claims 11 to 13, according to which the assembly (1) is heated until the composition has puffed.

15. Method according to any one of Claims 11 to 14 comprising, after the step consisting in heating the assembly (1), a step consisting in placing the assembly (1) in such a way that the presentation chamber (5) rests on the lower face (12) for the step consisting in removing the storage chamber (4).
